**Europäisches Patentamt**

**European Patent Office**

**Office européen des brevets**

(19)

(11) Numéro de publication : **0 140 794**
**B1**

(12)

# FASCICULE DE BREVET EUROPÉEN

(45) Date de publication du fascicule du brevet :
**25.05.88**

(21) Numéro de dépôt : **84402167.5**

(22) Date de dépôt : **29.10.84**

(51) Int. Cl.⁴ : **B 26 F 3/00, C 03 B 33/07,**
**B 32 B 17/10, C 03 B 33/04**

(54) Procédé de fabrication de vitrages feuilletés.

(30) Priorité : **29.10.83 DE 3339320**

(43) Date de publication de la demande :
**08.05.85 Bulletin 85/19**

(45) Mention de la délivrance du brevet :
**25.05.88 Bulletin 88/21**

(84) Etats contractants désignés :
**BE CH DE FR GB IT LI SE**

(56) Documents cités :
**EP-A- 0 107 573**
**FR-A- 2 367 710**
**FR-A- 2 528 994**
**US-A- 3 877 334**

(73) Titulaire : **SAINT-GOBAIN VITRAGE**
**Les Miroirs 18, avenue d'Alsace**
**F-92400 Courbevoie (FR)**
**BE CH FR GB IT LI SE**
**VEGLA Vereinigte Glaswerke GmbH**
**Viktoriaallee 3-5**
**D-5100 Aachen (DE)**
**DE**

(72) Inventeur : **Audi, Josef**
**Kronenberg 91**
**D-5100 Aachen (DE)**
Inventeur : **Blank, Burt**
**Haselsteig 13**
**D-5100 Aachen (DE)**
Inventeur : **Halberschmidt, Friedrich**
**Christianderichstrasse 16**
**D-9120 Herzogenrath (DE)**
Inventeur : **Kunert, Heinz**
**Am Krieler Dom 23**
**D-5000 Koeln (DE)**
Inventeur : **Roentgen, Paul**
**Talweg 7**
**D-5101 Roetgen-Rott (DE)**
Inventeur : **Simons, Hubert**
**Lothsief 17**
**D-5102 Wuerselen (DE)**

(74) Mandataire : **Muller, René et al**
**SAINT-GOBAIN RECHERCHE 39, quai Lucien Lefranc**
**F-93304 Aubervilliers (FR)**

**EP 0 140 794 B1**

Jouve, 18, rue St-Denis, 75001 Paris, France

## Description

La présente invention concerne la fabrication de vitrages feuilletés, fabrication au cours de laquelle on empile des feuilles prédécoupées de verre de silicate et de matière thermoplastique et on les assemble par action de la chaleur et de la pression.

Les vitrages feuilletés trouvent, dans une large mesure, des applications comme vitrages de sécurité dans des véhicules automobiles, en particulier comme pare-brise. Dans leur structure la plus simple, ils se composent de deux feuilles de verre de silicate, et d'une feuille intercalaire en matière thermoplastique, en particulier un polyvinylbutyral, qui assure notamment l'adhérence entre les deux feuilles de verre. Lorsque des conditions particulières de sécurité sont requises, les vitrages peuvent avoir une structure différente. Ainsi par exemple, on peut envisager une structure dans laquelle, du côté tourné vers l'intérieur de l'habitacle du véhicule, se trouve une feuille de protection contre les éclats, en une matière plastique particulière. Dans cette structure, en cas d'accident, la feuille de protection empêche un contact direct avec les arêtes vives des morceaux de verre brisé et la projection des éclats de verre. Par ailleurs, on sait aussi fabriquer des vitrages feuilletés présentant des propriétés améliorées de résistance aux chocs, dans lesquels on augmente la quantité de couches assemblées. En particulier, on peut citer les vitrages feuilletés qui présentent une ou plusieurs couches en une matière synthétique résistant aux chocs comme le polycarbonate.

Selon les procédés usuels d'assemblage des vitrages feuilletés, les feuilles de matière plastique destinées à constituer la feuille intercalaire sont découpées suivant des dimensions supérieures à celles nécessaires, puis ajustées aux dimensions du vitrage, après empilage des éléments constituant le vitrage, en découpant par détourage à la main les bords qui dépassent. Ce détourage manuel est très coûteux en temps. En outre, il est très difficile, par ce procédé, de découper les bords de façon très précise afin que la feuille soit exactement aux dimensions des feuilles de verre, et qu'après le pressage final, il ne reste aucune trace de matière plastique le long de la périphérie du vitrage.

On a proposé, pour accélérer le procédé d'assemblage de ce type de vitrage, par exemple dans le brevet US 3 508 810, de découper à l'aide d'un procédé mécanique les feuilles de matière plastique aux dimensions désirées avant leur assemblage avec les feuilles de verre. Mais on a malgré tout constaté que les feuilles découpées de façon mécanique se déformaient sous l'effet de la chaleur et de la pression nécessaires à l'assemblage définitif des vitrages : la matière plastique flue vers l'extérieur entre les feuilles de verre adjacentes. On est alors obligé d'intervenir une nouvelle fois après l'assemblage définitif du vitrage pour éliminer toute trace de matière plastique que le long de la périphérie du vitrage.

L'invention se propose de fournir un procédé de fabrication d'un vitrage feuilleté qui pallie ces inconvénients. Elle se propose notamment de fournir un procédé plus économique, dans lequel aucune opération sur la feuille de matière plastique n'est plus nécessaire après l'assemblage définitif du vitrage, une fois qu'il a été soumis à des conditions de température et de pression.

Plus précisément, conformément à l'invention, on procède à la découpe des feuilles de polyvinylbutyral aux dimensions requises pour leur utilisation dans différents types de vitrages feuilletés au moyen d'un jet d'eau à haute pression.

Sous un des aspects de l'invention, la découpe aux dimensions définitives des feuilles de polyvinylbutyral au moyen d'un jet d'eau à haute pression est effectuée avant l'empilage des éléments constitutifs du vitrage feuilleté. Dans ce cas, la découpe peut se faire aux dimensions exactes du vitrage ou avantageusement à des dimensions légèrement inférieures à celles des autres éléments du vitrage comme décrit par la suite.

Dans une variante, la découpe de la feuille de polyvinylbutyral aux dimensions définitives est effectuée après empilage des éléments constituant le vitrage feuilleté. Cette découpe est alors équivalente à une découpe de détourage mais sa précision est telle qu'il n'est pas nécessaire de revoir la découpe après l'assemblage définitif.

La découpe selon l'invention peut être réalisée alors que la feuille de polyvinylbutyral est prédécoupée sous la forme d'un primitif bien connu dans la fabrication des vitrages feuilletés.

Dans une variante, la découpe selon l'invention peut être effectuée directement sur une feuille ou ruban continu.

Un des avantages de la découpe par jet d'eau à haute pression selon l'invention est qu'elle est rapide et par conséquent la durée de l'opération est réduite. Pour diminuer encore cette durée de l'opération de découpe, on peut utiliser deux ou plus, de jets d'eau selon l'invention, chacun d'eux opérant sur une moitié ou une fraction de la périphérie à découper.

Il est connu que les propriétés d'adhérence des feuilles intercalaires usuelles à base de polyvinylbutyral sont fortement dépendantes de leur teneur en humidité. Plus la teneur en eau de la feuille est importante, et moins l'adhérence au verre est bonne. On pourrait donc supposer que l'application de la technique connue en soi et décrite par exemple dans le document US-A-3 877 334, de découpe au jet d'eau à de telles feuilles de polyvinylbutyral ne peut en aucun cas être envisagée car elle implique un contact direct entre l'eau et un matériau qui doit présenter des qualités d'adhérence au verre particulièrement bonnes. De façon surprenante, on a toutefois constaté que, non seulement on n'observait aucune détérioration des propriétés d'adhérence et de la qualité optique, mais que par contre, on observait un effet inattendu. Il s'est en effet avéré que les feuilles découpées selon l'invention ne se déformaient pas au niveau des bords de découpe au cours de l'assemblage définitif avec les autres feuilles constitutives du vitrage, par action de la chaleur et de la pression à l'autoclave comme cela se produit pour des feuilles découpées mécaniquement. Au contraire, les feuilles découpées selon l'invention conservent leur forme en tous points. C'est ainsi qu'il a été possible pour la première fois de fabriquer des vitrages feuilletés pour lesquels la feuille intercalaire a des dimensions légèrement inférieures à celles de feuilles de verre adjacentes, de sorte qu'il se crée sur la périphérie des feuilles de verre un canal qui peut par exemple être rempli avec une autre composition ou qui peut servir à d'autres buts, comme par exemple le dégazage de l'assemblage de feuilles, ou la fixation de profilés de protection des arêtes du vitrage.

Un dispositif particulièrement adapté pour la mise en œuvre d'un procédé de découpe au jet d'eau a été décrit dans le brevet US 4 092 889. Le dispositif décrit fonctionne selon le principe suivant : la pièce à découper est amenée sur un support horizontal, lequel est constitué à partir d'une bande flexible. L'outil de découpe pour la découpe de la pièce est monté sur un chariot déplaçable le long d'un pont lui-même mobile. En dessous du support, on trouve au moins trois poulies assurant un changement de direction et un retournement de la bande flexible. Deux des poulies, situées au niveau du support assurent le changement de position de la bande entre le support et une direction perpendiculaire vers le bas. Au moins une autre poulie, située à un plan inférieur, assure la transmission de la bande de façon à former une boucle qui définit, sur toute la largeur de la bande support, une fente qui se déplace avec le pont dans une direction transversale à la bande. Dans le cas où l'outil de découpe est un jet d'eau à haute pression, la présence de cette fente permet le passage du jet d'eau une fois qu'a été effectuée la découpe de la pièce.

Le dispositif connu peut être perfectionné pour s'adapter plus particulièrement à la découpe de feuilles de matière plastique comme le polyvinylbutyral à l'aide d'un jet d'eau à haute pression. Ainsi la fente s'étend sur toute la largeur du support, c'est-à-dire dans l'une des directions de coordonnées perpendiculaires X, Y. Dans l'autre direction de coordonnées, la fente bouge en synchronisation avec la tête de découpe au jet d'eau. On est ainsi assuré que pour chaque position de la tuyère à jet d'eau, le jet d'eau peut effectivement traverser le support, et que, simultanément, les autres parties superficielles de la feuille sont supportées de façon parfaitement plane.

Avantageusement, une cuve de réception pour l'eau en provenance du jet d'eau s'étend sur toute la largeur du support.

La bande flexible formant support peut être une bande sans fin présentant un brin supérieur et un brin inférieur, et elle est entraînée par un moteur, si bien qu'elle sert simultanément au transport de la feuille à découper pour sa mise en position sur le support.

D'autres caractéristiques et avantages de l'invention apparaîtront au cours de la description suivante, en relation avec la figure 1 à 4, parmi lesquelles :

La figure 1 représente une vue générale en perspective et en coupe partielle d'une première forme de réalisation d'une machine à chariot

La figure 2 représente une vue en perspective d'une autre forme de réalisation d'une machine à chariot.

La figure 3 représente une vue schématique du système de transport dans un dispositif au cours de la phase de chargement du dispositif avec une feuille discontinue.

La figure 4 est une représentation schématique du système de transport pendant la phase de découpe.

Les dispositifs de découpe de feuilles à l'aide d'un chariot tels que décrits ne sont pas uniquement adaptés à la découpe de couches adhésives thermoplastiques pour des vitrages feuilletés. Ils peuvent également être utilisés pour la découpe de feuille de matière plastique employées dans des vitrages feuilletés, et servant par exemple comme feuille externe de protection contre les éclats, ou comme feuille intercalaire ou de revêtement résistant aux chocs.

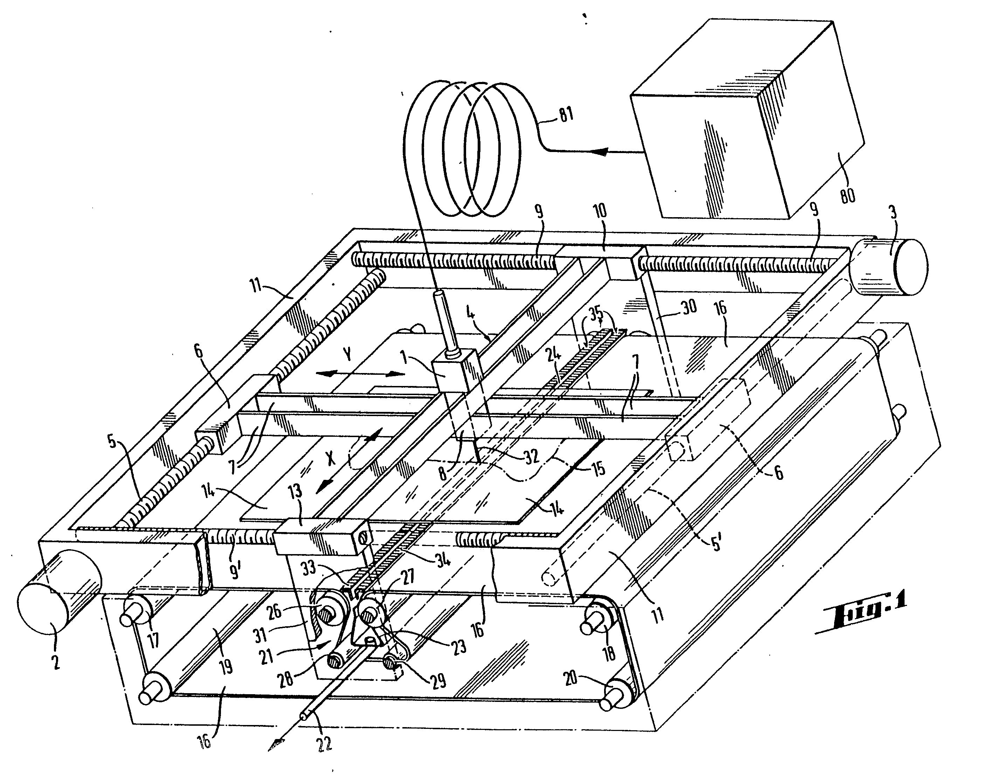

La forme de réalisation représentée à la fig. 1 concerne une machine automatique à chariot composé commandée par programme, pour laquelle la mise en route du chariot 1 dans les deux directions de coordonnées X et Y se fait à l'aide de deux moteurs 2, 3, lesquels sont commandés par une commande programmable non représentée. Le chariot 1, qui porte la tuyère à jet d'eau 8, est monté mobile le long du pont 4 dans la direction de coordonnée symbolisée par la double flèche X. Le moteur 2 sert à déplacer le chariot 1 dans la direction X, son mouvement de rotation étant transmis par la broche 5 à un porte-broche 6, lequel se déplace le long de la broche 5 du fait de la rotation de cette broche 5. Deux tiges de glissière 7, qui sont orientées dans la direction indiquée par la double flèche Y sont fixées au porte-broche 6, et sont par ailleurs également montées mobiles dans la direction X, à l'autre extrémité, par exemple sur une broche 5' qui tourne en même temps que la broche 5. Un élément qui pilote le chariot 1 coulisse entre les deux tiges de glissière 7, de sorte que le chariot peut également se déplacer dans la direction X grâce au moteur 2. Le réglage du déplacement dans la direction Y se fait à l'aide du moteur 3 dont le mouvement de rotation est transmis à la broche 9. Un porte-broche 10 se déplace le long de la broche 9 du fait de la rotation de ladite broche. Une broche 9' située à l'autre bout du cadre 11 de la machine par rapport à la broche 9 se met en rotation en même temps que la broche 9. La broche 9' est reliée à son tour à un porte-broche 13, lequel se déplace dans la direction Y en même temps que le porte-broche 10, du fait de la rotation de la broche 9'. Les deux porte-broches 10, 13 sont reliés par le pont 4, le long duquel le porte-outil 1 est mobile dans la direction Y.

Le support de la feuille de matière plastique en polyvinylbutyral à découper, est constitué d'une bande flexible sans fin 16, dont la partie supérieure est tendue entre deux rouleaux 17, 18 et la partie inférieure entre des rouleaux 19, 20. La bande forme, entre les rouleaux 17, 18 qui délimitent la partie supérieure de la bande et en dessous du pont 4, une boucle 21, qui se déplace en synchronisation avec ledit pont 4, et qui, au niveau de la partie supérieure de la bande, définit une fente 22. Pour réaliser la boucle, on dispose au niveau des porte-broches 10, 13, des plaques d'appui, respectivement 30, 31, lesquelles s'étendent jusqu'en dessous du support, et dans lesquelles sont montées, entre la partie supérieure et la partie inférieure de la bande 16, deux poulies supérieures de renvoi 26, 27 et deux poulies inférieures de renvoi 28, 29. Les poulies supérieures 26, 27 sont à une hauteur telle qu'elles maintiennent la partie supérieure de la bande 16 dans le plan défini par les rouleaux d'extrémité 17 et 18.

Dans l'espace ainsi défini par la boucle 21 se trouve une cuve de réception 23, qui s'étend sur toute la largeur du support et est également fixée aux plaques d'appui 30, 31. L'eau qui s'accumule dans ladite cuve est évacuée par un tuyau 24. Entre les deux poulies supérieures de renvoi 26, 27, on a avantageusement disposé deux profilés d'angle en forme de L, 33, 34, qui sont également fixés aux plaques d'appui 30, 31. Les faces externes des branches supérieures de ces profilés d'angle 33, 34 se trouvent dans le plan formant support de la bande transporteuse 16, tandis que les branches verticales délimitent la fente 24 et représentent ainsi une protection pour la bande transporteuse.

Les faces externes des branches supérieures des deux profilés d'angle sont garnies d'une cannelure transversale 35.

Grâce à cette cannelure, il se produit un équilibrage de la pression de l'air, et on empêche de la sorte que du fait de la dépression créée dans la fente 24 par le jet d'eau, la feuille plaquée sur les profilés d'angle 33, 34 adhère auxdits profilés d'angle, ce qui conduirait à un déplacement de la feuille sur le support.

L'eau sous haute pression est produite dans l'unité de pression 80 et conduite à la tuyère 8 par le conduit haute pression 81.

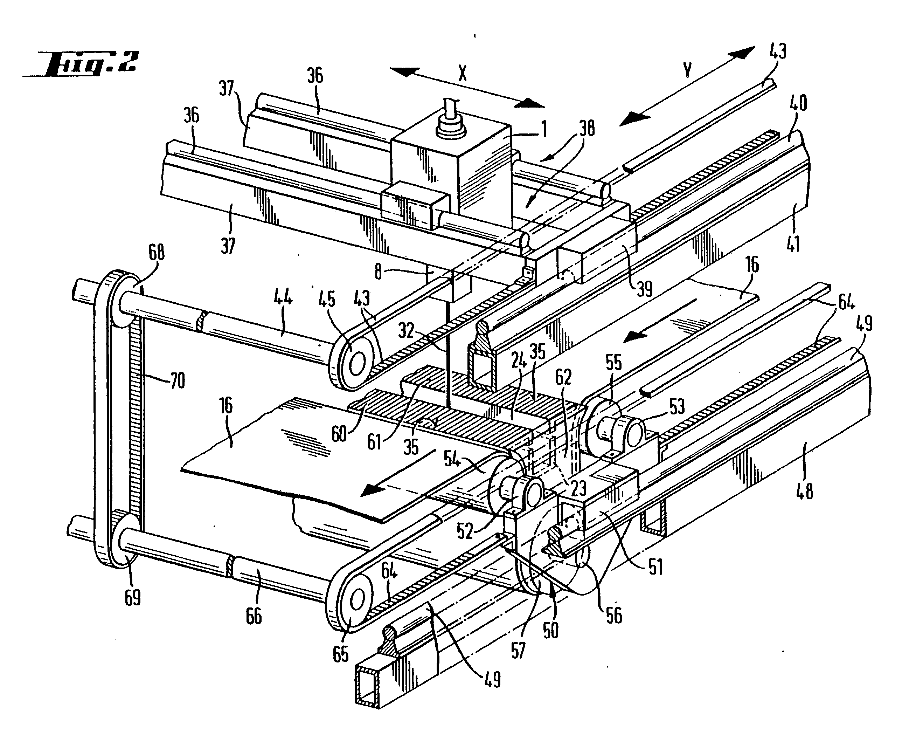

La figure 2 représente une autre forme de réalisation d'un dispositif selon l'invention. Selon cette variante, le chariot 1, qui porte la tuyère à jet d'eau 8, est monté déplaçable dans la direction Y sur des glissières 36, l'entraînement du chariot n'étant pas représenté par souci de clarté. Les glissières 36 sont disposées sur des profilés d'appui 37 qui constituent un pont 38 déplaçable dans la direction Y, et sont logés par l'intermédiaire de palier à glissement 39 dans des glissières 40. Les glissières 40 sont disposées sur le cadre supérieur 41 de la machine.

L'entraînement du pont 38 a lieu grâce à des courroies dentées 43, qui sont entraînées par un moteur non représenté et par l'intermédiaire d'un arbre de transmission 44 et d'engrenages 45, le moteur étant commandé par un système de commande numérique.

En dessous du plan formant support se trouve un bâti supplémentaire 48 parallèle au cadre 41, et qui porte des glissières 49. Sur chacune de ces glissières 49 est monté un chariot 50, lequel est déplaçable sur des paliers à glissement 51. Le chariot 50 porte deux coussinets supérieurs de pivotement 52, 53 et un coussinet inférieur 56. Des poulies de renvoi cylindriques sont montées en rotation libre dans lesdits coussinets de rotation, respectivement 54, 55 dans les coussinets 52, 53, et 57 dans le coussinet inférieur 56. La bande 16 est, en arrivant sur la poulie 55, inclinée vers le bas, elle s'enroule sur la poulie inférieure 57 et est de nouveau retournée en passant autour de la poulie 54, pour se retrouver dans le plan horizontal. La fente définie du fait de l'agencement de ces trois poulies 55, 54, 57 est délimitée par deux sections profilées en L, 60, 61, qui sont par ailleurs fixées au chariot 50 par l'intermédiaire d'une plaque 62.

Comme précédemment, on trouve une cuve de réception pour le jet d'eau 32 dans l'espace défini par la boucle résultant des retours successifs de la bande flexible 16 autour des poulies 54, 55 et 57, mais cette cuve n'est pas représentée pour des raisons de clarté. Les sections profilées en L sont également garnies de cannelures transversales 35 pour les raisons indiquées précédemment en relation avec la figure 1.

Les chariots 50 qui portent les poulies 54, 55, 57 sont déplacés grâce à des courroies dentées 64, des engrenages 65 et l'arbre de transmission 66 en synchronisation avec le pont 38, de sorte qu'on garantit un mouvement synchrone entre les arbres de transmission 44 et 66, par l'intermédiaire des engrenages 68, 69 et les courroies dentées 70.

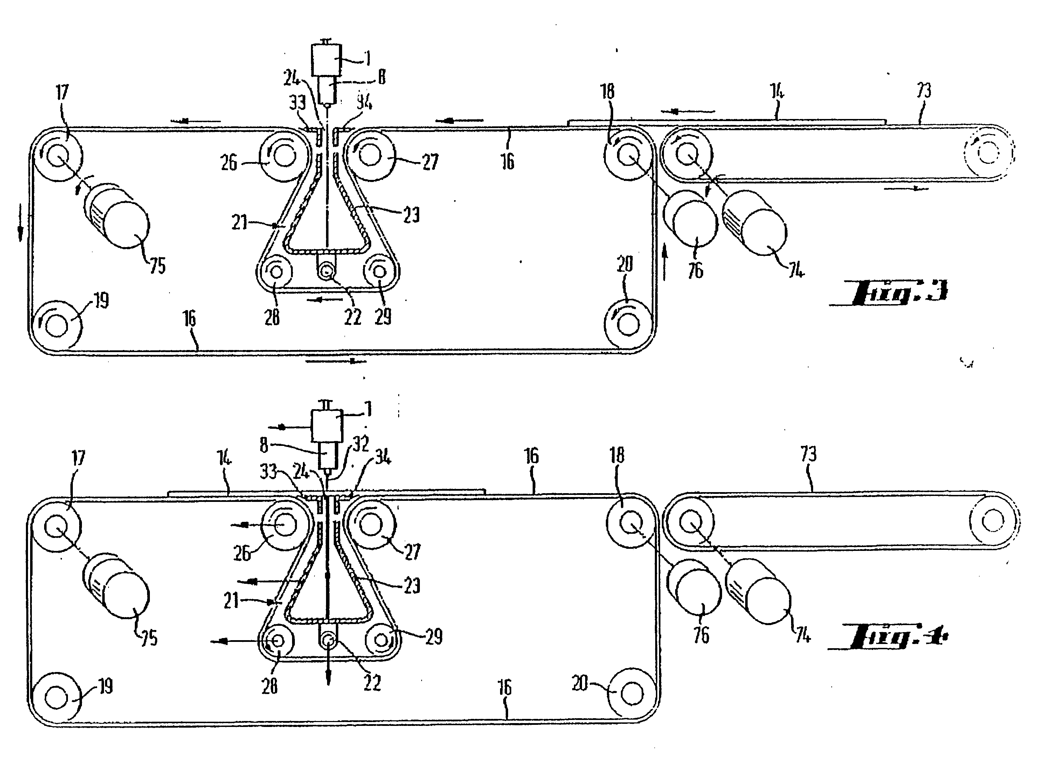

La bande 16 ne sert pas uniquement de support pour la feuille à découper, mais également de bande transporteuse pour l'alimentation et l'évacuation du poste de découpe des feuilles. Les figures 3 et 4 représentent schématiquement la phase d'alimentation ainsi que les organes supplémentaires qui sont nécessaires pour la mener à bien.

On amène la feuille discontinue 14 ou l'ébauche de la feuille de matière plastique à découper au support formé de la bande flexible 16 à l'aide d'un tapis convoyeur 73. Par souci de simplification, on n'a représenté que la partie supérieure de la machine à chariot composé, à savoir le chariot 1 équipé de la tuyère à jet d'eau 8. Au cours de cette étape, la bande transporteuse 16, qui passe par les quatre rouleaux 17, 18, 19, 20, de façon à constituer une bande sans fin avec une partie supérieure et une partie inférieure, est entraînée à l'aide d'un moteur 75, lequel marche à la même vitesse que le moteur 74 d'entraînement du tapis convoyeur 73. Dès que la feuille discontinue 14 se trouve à l'emplacement convenable dans la machine à chariot composé, on arrête le moteur 75 et on le bloque au moyen d'un frein incorporé qui bloque le rouleau 17. De la même façon et simultanément, le rouleau 18 qui se trouve à l'autre extrémité de la partie supérieure de la bande transporteuse se trouve bloqué en position par l'action d'un frein 76. On évite de cette façon qu'au cours de la phase de découpe la bande transporteuse 16 ne s'étire ou modifie sa position ce qui entraînerait obligatoirement une modification de la position de la feuille discontinue 14. Pendant l'opération de découpe, qui est représentée fig. 4, la fente créée du fait de l'enroulement de la bande transporteuse 16 autour des poulies 26 à 29 se déplace sur le support en synchronisation avec le chariot porte-outil. Dès que la phase de découpe est achevée, le frein 76 est relâché, le moteur 75 met de nouveau la bande 16 en mouvement, ce qui fait que la feuille discontinue 14 est amené sur un tapis convoyeur non représenté, et la bande 16 est alors libérée et mise en mouvement pour l'amenée de la prochaine feuille discontinue à découper.

Le dispositif tel qu'il est décrit peut être installé sur la ligne de fabrication de vitrages feuilletés. La ligne de fabrication peut comprendre une ou plusieurs autres machines de découpe pour les feuilles de verre de silicate, qui fonctionnent également avec un chariot composé et sont équipées des mêmes commandes de programme. Simplement, au lieu d'équiper le chariot porte-outil d'une tuyère à jet d'eau à haute pression, on l'équipe d'un outil de découpe mécanique adapté pour découper des feuilles de verre. On utilise, pour les deux types de machines, servant d'une part à la découpe des feuilles de matière plastique et d'autre part, à la découpe des feuilles de verre, le même programme de découpe, qui peut par exemple se présenter sous la forme d'une bande magnétique. Les feuilles ainsi découpées sont empilées les unes sur les autres et soumises, de façon connue en soi, après un dégazage approprié, à un traitement faisant intervenir la chaleur et la pression dans un autoclave afin d'obtenir l'assemblage définitif des feuilles constituant le vitrage.

**Revendications**

1. Procédé de fabrication d'un vitrage feuilleté, comprenant au moins une feuille de verre et au moins une feuille de polyvinylbutyral dans lequel on découpe la ou les feuilles de verre et la ou les feuilles de polyvinylbutyral aux dimensions définitives souhaitées, on empile les éléments du vitrage feuilleté et on les assemble par action de la température et de la pression, caractérisé en ce que pour découper la ou les feuilles de polyvinylbutyral, on utilise au moins un jet d'eau à haute pression.

2. Procédé selon la revendication 1, caractérisé en ce que on guide le jet d'eau à haute pression à l'aide d'une machine à chariot composé commandée par programme, suivant le contour souhaité autour de la feuille de polyvinylbutyral.

3. Procédé selon la revendication 2, caractérisé en ce que la découpe des feuilles de verre et celle des feuilles de polyvinylbutyral sont toutes deux effectuées à l'aide d'une machine à chariot composé portant l'outil de découpe et commandée par programme, et on utilise pour les deux machines des systèmes de commande et des programmes de découpe identiques.

4. Procédé selon une des revendications 1 à 3, caractérisé en ce que la découpe est effectuée avant empilage des éléments constituant le vitrage feuilleté.

5. Procédé selon la revendication 4, caractérisé en ce que la découpe est effectuée à des dimensions légèrement inférieures à celles du vitrage feuilleté.

**Claims**

1. A method of making a laminated pane, comprising at least one glass sheet and at least one sheet of polyvinylbutyral in which the sheet or sheets of glass and the sheet or sheets of polyvinylbutyral are cut to the desired final dimensions, and the elements of the laminated pane are positioned together and assembled together by the action of heat and pressure, characterised in that at least one jet of water at high pressure is used for cutting the sheet or sheets of polyvinylbutyral.

2. A method according to claim 1, characterised in that the jet of water at high pressure is guided by means of a compound carriage machine controlled by a programme, according to the desired contour around the sheet of polyvinylbutyral.

3. A method according to claim 2, characterised in that cutting of the glass sheets and cutting of the polyvinylbutyral sheets are both carried out by means of a compound carriage machine carrying a cutting tool and controlled by a programme, and identical control systems and cutting programmes are used for the two machines.

4. A method according to one of claims 1 to 3, characterised in that cutting is carried out before positioning together of the elements of the laminated pane.

5. A method according to claim 4, characterised in that cutting is carried out to dimensions slightly less than those of the laminated pane.

**Patentansprüche**

1. Verfahren zum Herstellen einer Verbundglasscheibe aus wenigstens einer Glasscheibe und wenigstens einer Folie aus Polyvinylbutyral, bei dem die Glasscheibe(n) und die Polyvinylbutyralfolie(n) auf die gewünschten endgültigen Abmessungen geschnitten und die Schichten der Verbundglasscheibe aufeinandergelegt und durch die Einwirkung von Temperatur und Druck miteinander verbunden werden, dadurch gekennzeichnet, daß zum Schneiden der Polyvinylbutyralfolie(n) wenigstens ein Hochdruck-Wasserstrahl verwendet wird.

2. Verfahren nach Anspruch 1, dadurch gekennzeichnet, daß der Hochdruck-Wasserstrahl mit Hilfe einer programmgesteuerten Kreuzschlittenmaschine entlang der gewünschten Kontur über die Polyvinylbutyralfolie geführt wird.

3. Verfahren nach Anspruch 2, dadurch gekennzeichnet, daß sowohl die Glasscheiben als auch die Polyvinylbutyralfolien jeweils mit Hilfe einer programmgesteuerten Maschine mit einem das Schneidwerkzeug tragenden Kreuzschlitten geschnitten werden, und daß für beide Maschinen die gleichen Steuersysteme und Schneidprogramme verwendet werden.

4. Verfahren nach einem der Ansprüche 1 bis 3, dadurch gekennzeichnet, daß der Schneidvorgang vor dem Aufeinanderlegen der die Verbundglasscheibe bildenden Schichten erfolgt.

5. Verfahren nach Anspruch 4, dadurch gekennzeichnet, daß die Folie auf Abmessungen geschnitten wird, die geringfügig kleiner sind als die Abmessungen der Verbundglasscheibe.

Fig.1

Fig.2

0 140 794

Fig.3

Fig.4

0 140 794